# EUROPÄISCHE PATENTSCHRIFT

(11) **EP 2 292 080 B1**
(45) Veröffentlichungstag und Bekanntmachung des Hinweises auf die Patenterteilung: **17.09.2014**
(21) Anmeldenummer: 09761462.2
(22) Anmeldetag: 09.06.2009
(51) Int. Cl.: H05H 1/24

(54) **VORRICHTUNG UND VERFAHREN ZUR MIKROSTRUKTURIERTEN PLASMABEHANDLUNG**
DEVICE AND METHOD FOR MICROSTRUCTURED PLASMA TREATMENT
DISPOSITIF ET PROCEDE DE TRAITEMENT PAR PLASMA A MICROSTRUCTURE

(30) Priorität: 09.06.2008 DE 102008027461
(43) Veröffentlichungstag der Anmeldung: 09.03.2011
(73) Patentinhaber: Fraunhofer-Gesellschaft zur Förderung der angewandten Forschung e.V., 80686 München (DE)
(72) Erfinder: THOMAS, Michael, 31275 Lehrte (DE); KLAGES, Claus-Peter, 38102 Braunschweig (DE); DOHSE, Antje, D-38179 Lagesbüttel (DE)
(86) Internationale Anmeldenummer: PCT/EP2009/004143
(87) Internationale Veröffentlichungsnummer: WO 2009/149899

(56) Entgegenhaltungen:
- JP-A- 9 202 496
- US-A- 3 348 022
- US-A- 3 407 131
- US-A- 4 024 038
- US-A- 4 365 283
- US-A1- 2004 187 783
- US-B1- 6 320 157

## Beschreibung

Die vorliegende Erfindung betrifft eine Vorrichtung und ein Verfahren zur mikrostrukturierten Plasmabehandlung eines Foliensubstrates sowie Verwendungen derartiger Vorrichtungen und Verfahren. Diese werden insbesondere zur Behandlung von Kunststofffolien, beispielsweise zur Beschichtung von Kunststofffolien, oder zur Aktivierung oder Funktionalisierung zumindest einer ihrer Oberflächen eingesetzt.

Zur mikrostrukturierten Funktionalisierung oder Beschichtung von Oberflächen von Foliensubstraten wird herkömmlicherweise das Substrat zwischen zwei planare Elektroden gelegt und das System wie ein Stempel über einen Hubmechanismus über der Folie geschlossen. Eine der Elektroden weist dabei Mikrostrukturen auf, in denen sich dann selektiv bei Anlegung einer Hochspannung ein Plasma ausbildet. Nach der Behandlung wird das System wieder geöffnet und die Folie ein Stück weitergeführt und anschließend ein weiteres Stück der Folie in entsprechender Weise behandelt. Das Verfahren wird also in einem Batch-Prozess (chargenweise Behandlung) durchgeführt.

Eine Vorrichtung zur Behandlung eines Materialgewebes ist im Dokument US-B1-6 320 157 offenbart.

Zur kontinuierlichen Behandlung einer Oberfläche einer Folie ist es bekannt, dass eine Walze mit einer Grobstruktur eingesetzt werden kann, der gegenüber liegend eine Elektrode angeordnet wird. Hier stellt man eine Walze mit verschiedenen Strukturtiefen bereit. Die Strukturen sind dann mit einem Dielektrikum ausgefüllt. Auf der von der Walze abgewandten Seite lässt sich dann ein selektives Plasma zünden. Damit ist eine selektive Behandlung derjenigen Folienseite, die von der Walze weg orientiert ist, möglich. Allerdings erfordert die Walzenstruktur ein hohes Aspektverhältnis von bis zu einigen Millimetern, so dass gerade bei Prozessgasen, wie Stickstoff und Edelgasen, keine scharfen Abgrenzungen der Strukturen mehr erreicht werden können. Dies liegt hauptsächlich daran, dass es zu einer räumlichen Glimmentladung (auch bekannt als Atmospheric Plasma Glow Discharge), in den Edelgasen kommt. Im Falle von Stickstoff als Prozessgas entstehen sehr langlebige reaktive Spezies, die auch diejenigen Bereiche der Oberfläche funktionalisieren bzw. behandeln können, die nicht direkt dem Plasma ausgesetzt sind. Ein weiterer Nachteil dieser Verfahren ist, dass es zu einer unerwünschten rückseitigen Behandlung der Folie kommen kann.

Aufgabe der vorliegenden Erfindung ist es daher, eine Vorrichtung und ein Verfahren zur mikrostrukturierten Plasmabehandlung eines Foliensubstrates zur Verfügung zu stellen, das im kontinuierlichen Prozess geführt werden kann und die Erzeugung bzw. Behandlung kleinster Strukturen ermöglicht. Weiterhin ist es Aufgabe der vorliegenden Erfindung, Verwendungen derartiger Vorrichtungen und Verfahren zur Verfügung zu stellen.

Diese Aufgabe wird durch die Vorrichtung nach Anspruch 1, das Verfahren nach Anspruch 5 sowie die Verwendung nach Anspruch 10 gelöst. Vorteilhafte Weiterbildungen des erfindungsgemäßen Verfahrens, der erfindungsgemäßen Vorrichtung und der erfindungsgemäßen Verwendung werden in den jeweiligen abhängigen Ansprüchen gegeben.

Erfindungsgemäß wird die zu behandelnde Folie mit der zu behandelnden Seite über eine Walze bzw. einen Zylinder geführt, die als Elektrode ausgebildet ist. Dies bedeutet, dass sie vorteilhafterweise eine metallische Oberfläche, insbesondere Chrom enthaltend, aufweist. Diese Walze bzw. dieser Zylinder kann mittels Lithographie oder Gravurtechnik, wie beispielsweise Tiefgravur, Laserbelichtung oder Laserablation, mikrostrukturiert sein. Die Strukturen weisen vorteilhafterweise Strukturbreiten im Bereich von 1 µm bis zu mehreren 10 Millimetern, vorteilhafterweise zwischen 20 µm und 5 mm, auf. Die Tiefe der Struktur beträgt dabei vorteilhafterweise einige Mikrometer bis mehrere Millimeter, vorteilhafterweise 1 µm bis 1 mm, vorteilhafterweise 20 µm und 200 µm, und ist variabel einstellbar. Die Breite der Walze liegt vorteilhafterweise im Bereich von 0,1 bis 5 m, sie weist vorteilhafterweise einen Durchmesser von 10 bis 60 cm auf, was die Aufskalierungsmöglichkeiten des Verfahrens zeigt.

Wie bereits erwähnt, wird über einen Teilbereich dieses Zylinders die zu behandelnde Folie mit ihrer zu behandelnden Oberfläche gegenüber der Zylinderoberfläche gespannt. Direkt vor dem Auflegen der Folie auf die Zylinderoberfläche wird über einen Gasspalt ein Prozessgas, insbesondere Stickstoff, Helium, Formiergas etc. eingebracht und durch das Aufliegen der Folie in den mikrostrukturierten Vertiefungen eingeschlossen.

Auf diese zu behandelnde Folie wird eine Hochspannungselektrode aufgebracht, deren Form der Form desjenigen Bereiches des Zylinders entspricht, auf dem die Folie aufliegt. Dadurch wird die Hochspannungselektrode auf die Folienrückseite weitgehend formschlüssig mit dem Zylinder fest angepresst. Hierdurch verbleiben als Hohlräume, die Prozessgas enthalten, lediglich noch die Mikrostrukturen in der zylinderförmigen Elektrode. Wird an die Hochspannungselektrode nun eine Hochspannung gelegt, so erfolgt eine selektive Zündung des Plasmas in den mikrostrukturierten Vertiefungen auf dem Zylinder. Die Folie wird also selektiv in den Bereichen behandelt ("strukturiert"), in denen der Zylinder Mikrostrukturen bzw. Vertiefungen aufweist.

Auf diese Weise ist es möglich, durch Anlegen einer Hochspannung die Folie strukturiert zu behandeln. Da die Folie über die Walze geführt wird, ist eine kontinuierliche Behandlung der der Walze zugewandten Oberfläche der Folie möglich. Es ist also auch möglich, die Folien kontinuierlich von Rolle zu Rolle zu behandeln. Auf diese Weise ist also eine Behandlung der Oberfläche der Folie, beispielsweise die Verbesserung der Benetzung der Folie oder auch eine Metallisierung selektiv in einzelnen Bereichen möglich. So können auf die Folie beispielsweise flexible Leiterbahnen, RFID-Schaltkreise, Biosensoren und/oder SmartTags Ressourcen-schonend und extrem kostengünstig aufgebracht werden.

Vorteilhafterweise wird zwischen der Hochspannungselektrode und dem Foliensubstrat eine weitere Folie parallel zu Foliensubstrat geführt, um Beschädigungen des Foliensubstrates auf seiner der Hochspannungselektrode zugewandten Rückseite zu verhindern. Die weitere Folie kann dabei umlaufend geführt werden.

Im Folgenden werden einige Beispiele erfindungsgemäßer Vorrichtungen und Verfahren gegeben. Dabei zeigt
- Figur 1: den Aufbau einer Vorrichtung zur mikrostrukturierten kontinuierlichen Behandlung von Foliensubstraten;
- Figur 2: eine mit Tiefgravur strukturierte Walze;
- Figur 3: eine strukturiert behandelte PET-Folie, nach Benetzung mit Wasserdampf; und
- Figur 4: eine nasschemisch metallisierte Polyimid-Folie mit Strukturbreiten im Bereich von 200 µm nach strukturierter nasschemischer Behandlung.

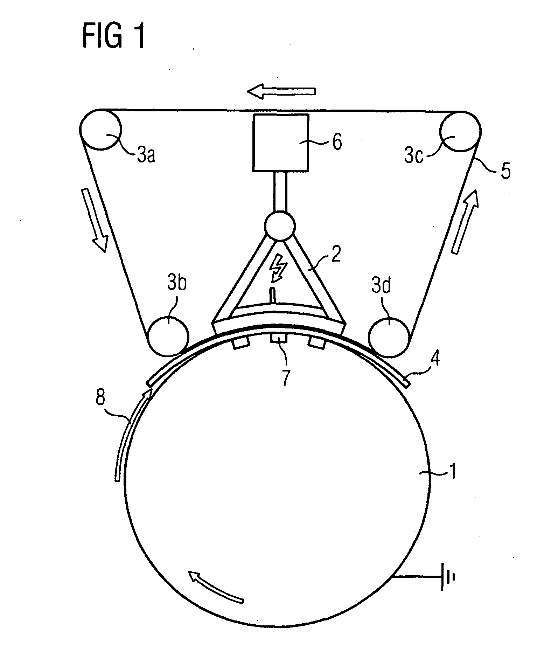

Figur 1 zeigt eine Vorrichtung zur mikrostrukturierten kontinuierlichen Behandlung von Folien. Diese weist eine zylinderförmige Elektrode 1 auf, die elektrisch mit Masse verbünden ist. Sie besitzt eine Oberfläche aus Chrom. Die Oberfläche des Zylinders 1 weist mikrostrukturierte Vertiefungen 7 auf, die in Figur 1 lediglich schematisch und bezüglich ihrer Größe überhöht dargestellt sind. Auf dieser Oberfläche des Zylinders 1 wird eine Folie 4 geführt, deren zum Zylinder 1 gewandte Oberfläche behandelt werden soll. Diese Folie wird beispielsweise über nicht dargestellte Rollen zu dem Zylinder 1 geführt und von dem Zylinder wieder weggeführt. Es findet also eine kontinuierliche Behandlung der Folienoberfläche statt. Unmittelbar vor Anliegen der Folie 4 an die Oberfläche des Zylinders 1 wird ein Prozessgas 8 eingespeist, das anschließend in den mikrostrukturierten Vertiefungen 7 zwischen der Zylinderoberfläche und der Folie 4 eingeschlossen wird.

Oberhalb des Zylinders 1 befindet sich eine Hochspannungselektrode 2, die über eine Vorrichtung 6 an die Oberfläche des Zylinders 1 fest angepresst werden kann. Die der Oberfläche des Zylinders 1 gegenüber liegende Oberfläche der Elektrode 2 weist eine zur Oberfläche des Zylinders 1 komplementäre Form auf und kann daher weitgehend formschlüssig an die Oberfläche des Zylinders 1 bzw. auf die Folie 4 aufgepresst werden.

Zusätzlich wird zwischen der Folie 4 und der Hochspannungselektrode 2 eine weitere Folie 5 über Rollen 3a, 3b, 3c, 3d im Umlauf geführt, wobei die Folie 5 im Wesentlichen die Folie 4 vor Beschädigung durch die Hochspännungselektrode 2 beim Durchlaufen des Spalts zwischen der Walze 1 und der Hochspannungselektrode 2 schützt. Soweit die Folie 5 mit gleicher Geschwindigkeit wie die Folie 4 durch den Spalt geführt wird, schützt die Folie 5 die Folie 4 vor Verschiebungen und Kratzern auf der der Hochspannungselektrode 2 zugewandten rückseitigen Oberfläche der Folie 4.

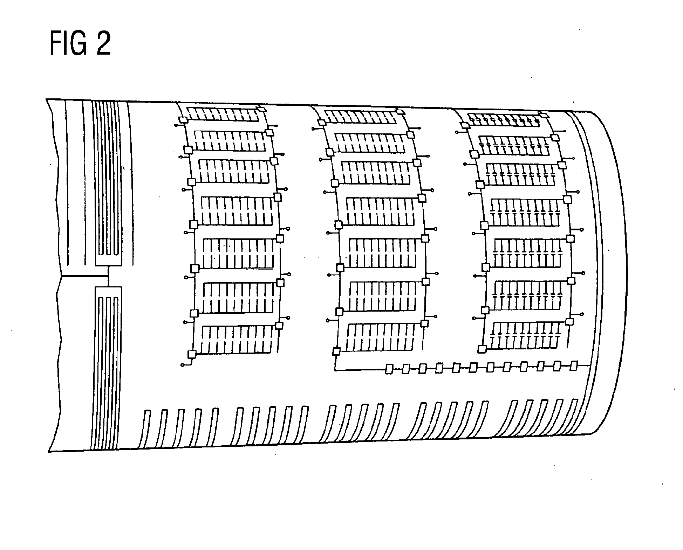

Figur 2 zeigt nun eine mit Tiefgravur strukturierte Walze, wie sie beim folgenden Beispiel verwendet wurde.

Bei diesem Beispiel wurde eine Folie zur besseren Benetzung vorbehandelt.

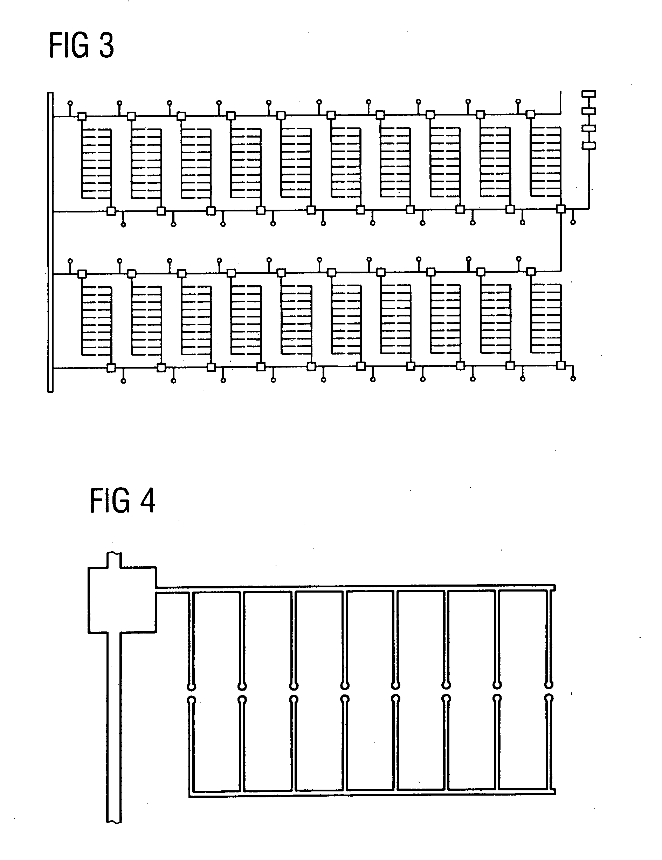

Die strukturierte Vorbehandlung zur Benetzung wurde beispielhaft an einer PET-Folie durchgeführt. Die Versuche erfolgten mit einem Gesamtgasfluss 70 slm N₂, bei einer Leistung von 140 W und einer Frequenz von 20 kHz. Die Bahngeschwindigkeit der Folie betrug dabei 0,6 m/min. Bei anschließenden Benetzungsversuchen über warmem Wasserdampf traten deutlich die unterschiedlichen unbehandelten (hydrophob) und behandelten (hydrophil) Bereiche hervor, wie in Figur 3 zu erkennen ist.

In einem weiteren Beispiel wurde eine erfindungsgemäße Vorbehandlung zur nasschemischen Metallisierung durchgeführt.

Für die strukturierte Vorbehandlung wurde beispielhaft eine Polyimid-Folie mit einem Gasgemisch aus 85 % He, 13,5 % N₂ und 1,5 % H₂ im Plasma funktionalisiert. Der Gesamtgasfluss lag im Bereich zwischen 50 und 70 slm, die Leistung 84 W bei einer Frequenz von 22 kHz. Die Bahngeschwindigkeit der Folie lag bei 0,6 m/min. Aber auch die Vorbehandlung mit einem Gasgemisch aus 97,9 % N₂ und 2, 1 % H₂ (49 N₂ und 21 N₂/H₂) bei 70 slm Gesamtgasfluss mit ähnlichen Zündparametern führte zu einer erfolgreichen strukturierten Funktionalisierung. Die Bahngeschwindigkeit betrug auch hier 0,6 m/min. Die Folien wurden im Anschluss dann nasschemisch nach folgender Prozedur, wie z.B. bei Charbonnier beschrieben, metallisiert:
1) Bekeimung mit PdCl2,
2) Reduzierung mit Natriumhypophosphit,
3) Chemische Verkupferung.

Figur 4 zeigt hier eine erfindungsgemäß behandelte metallisierte Polyimidfolie mit Strukturbreiten im Bereich von 200 µm.

## Patentansprüche

1. Vorrichtung zur mikrostrukturierten Plasmabehandlung eines Foliensubstrates (4), insbesondere einer Kunststofffolie, mit
eine drehbar gelagerte zylinderförmige Elektrode (1), deren Oberfläche Metall, insbesondere Chrom, enthält oder daraus besteht, wobei die Oberfläche mikrostrukturierte Vertiefungen (7) aufweist, eine Transportvorrichtung (3a, ..., 3d) zum Transport des zu behandelnden Foliensubstrates (4) zwischen der Oberfläche der zylinderförmigen Elektrode (1) und der Hochspannungselektrode (2), sowie
eine Vorrichtung zur Einspeisung von Prozessgas (8) auf die Oberfläche der zylinderförmigen Elektrode (1) und in den Zwischenraum zwischen der zylinderförmigen Elektrode (1) und der Hochspannungselektrode (2), **gekennzeichnet durch** eine flächige Hochspannungselektrode (2), deren Oberfläche eine zur Oberfläche der zylinderförmigen Elektrode (1) komplementäre Form aufweist und weitgehend formschlüssig auf einem Abschnitt der Oberfläche der zylinderförmigen Elektrod (1) anordenbar ist.

2. Vorrichtung nach dem vorhergehenden Anspruch,
**gekennzeichnet durch** eine Vorrichtung zum, insbesondere umlaufenden, Transport einer weiteren Folie, insbesondere einer Kunststofffolie, zwischen der Oberfläche der zu behandelnden Folie bzw. der zylinderförmigen Elektrode und der Hochspannungselektrode.

3. Vorrichtung nach dem vorhergehenden Anspruch,
**dadurch gekennzeichnet, dass** die Vorrichtung zum Transport des zu behandelnden Foliensubstrates und die Vorrichtung zum Transport der weiteren Folie derart ausgebildet sind, dass das zu behandelnde Foliensubstrat und die weitere Folie mit gleicher Geschwindigkeit über die Oberfläche der zylinderförmigen Elektrode bewegbar sind.

4. Vorrichtung nach einem der vorhergehenden Ansprüche, **dadurch gekennzeichnet, dass** die zylinderförmige Elektrode mindestens eine, mehrere oder alle der folgenden Eigenschaften aufweist: eine Breite zwischen 10 cm und 5 m, einen Durchmesser zwischen 10 cm und 60 cm, mikrostrukturierte Vertiefungen mit einer Tiefe zwischen 1 µm und 1 mm, mikrostrukturierte Vertiefungen mit einer Strukturbreite je Vertiefung zwischen 1 µm und 10 mm.

5. Verfahren zur mikrostrukturierten Plasmabehandlung eines Foliensubstrates (4), insbesondere einer Kunststofffolie,
**dadurch gekennzeichnet dass** das Foliensubstrat (4) zwischen der Oberfläche einer drehbar gelagerten zylinderförmigen Elektrode (1), deren Oberfläche Metall, insbesondere Chrom, enthält oder daraus besteht, und der Oberfläche einer flächigen Hochspannungselektrode (2) hindurchgeführt wird,
wobei die Oberfläche der zylinderförmigen Elektrode (1) mikrostrukturierte Vertiefungen (7) aufweist, und die Oberfläche der Hochspannungselektrode eine zur Oberfläche der zylinderförmigen Elektrode (1) komplementäre Form aufweist und weitgehend formschlüssig auf einem Abschnitt der Oberfläche der zylinderförmigen Elektrode (1) angeordnet ist, unmittelbar vor dem Anlegen des Foliensubstrates (4) an die Oberfläche der zylinderförmigen Elektrode (1) zwischen die Oberfläche der zylinderförmigen Elektrode (1) und die Oberfläche des Foliensubstrates (4) ein Prozessgas (8) eingebracht und durch das Foliensubstrat (4) in den mikrostrukturierten Vertiefungen (7) eingeschlossen wird, sowie
zwischen der zylinderförmigen Elektrode (1) 2und der Hochspannungselektrode (2) eine Hochspannung angelegt und in dem eingeschlossenen Prozessgas (8) eine kalte transiente Plasma-Gasentladung erzeugt wird.

6. Verfahren nach dem vorhergehenden Anspruch, **dadurch gekennzeichnet, dass** zwischen dem Foliensubstrat und der Hochspannungselektrode eine weitere Folie, insbesondere eine Kunststofffolie, vorteilhafterweise umlaufend, hindurchgeführt wird.

7. Verfahren nach dem vorhergehenden Anspruch, **dadurch gekennzeichnet, dass** das zu behandelnde Foliensubstrat und die weitere Folie mit gleicher Geschwindigkeit zwischen den Oberflächen der zylinderförmigen Elektrode und der Hochspannungselektrode hindurchgeführt werden.

8. Verfahren nach einem der drei vorhergehenden Ansprüche, **dadurch gekennzeichnet, dass** die zylinderförmige Elektrode mindestens eine, mehrere oder alle der folgenden Eigenschaften aufweist: eine Breite zwischen 10 cm und 5 m, einen Durchmesser zwischen 10 cm und 60 cm, mikrostrukturierte Vertiefungen mit einer Tiefe zwischen 1 µm und 1 mm, mikrostrukturierte Vertiefungen mit einer Strukturbreite je Vertiefung zwischen 1 µm und 10 mm, vorteilhafterweise zwischen 20 µm und 5 mm.

9. Verfahren nach einem der Ansprüche 5 bis 8, **dadurch gekennzeichnet, dass** das Prozessgas in den mikrostrukturierten Vertiefungen einen Druck zwischen 0,1 bar und 10 bar, vorteilhafterweise einen Druck zwischen 0,5 bar und 1,5 bar aufweist.

10. Verwendung einer Vorrichtung oder eines Verfahrens nach einem der vorhergehenden Ansprüche zur mikrostrukturierten Funktionalisierung einer Oberfläche, insbesondere zur Veränderung der Benetzbarkeit der Oberfläche mit Wasser, zur Aktivierung einer Oberfläche und/oder zur Beschichtung, insbesondere zur Metallisierung, einer Oberfläche eines zu behandelnden Substrates.

11. Verwendung nach dem vorhergehenden Anspruch zur Herstellung flexibler Leiterbahnen, zur Herstellung von RFID-Schaltkreisen (Radiofrequenz-Identifikations-Schaltkreisen), zur Herstellung von Biosensoren und/oder zur Herstellung von SmartTags (kombinierte Etiketten).

## Claims

1. Device for the microstructured plasma treatment of a foil substrate (4), in particular a plastic foil,
comprising
a rotatably mounted cylindrical electrode (1), the surface of which comprises metal, in particular chromium, or consists thereof, the surface having microstructured recesses (7),
a transport device (3a, ..., 3d) for transporting the foil substrate (4) to be treated between the surface of the cylindrical electrode (1) and the high-voltage electrode (2), and also a device for supplying process gas (8) to the surface of the cylindrical electrode (1) and into the intermediate space between the cylindrical electrode (1) and the high-voltage electrode (22), **characterized by**
a planar high-voltage electrode (2), the surface of which has a shape complementary to the surface of the cylindrical electrode (1) and can be disposed on a portion of the surface of the cylindrical electrode (1) extensively in a form fit.

2. Device according to the preceding claim, **characterised by** a device for, in particular rotational, transport of a further foil, in particular of a plastic foil, between the surface of the foil to be treated or the cylindrical electrode and high-voltage electrode, respectively.

3. Device according to the preceding claim, **characterised in that** the device for transporting the foil substrate to be treated and the device for transporting the further foil are configured such that the foil substrate to be treated and the further foil can be moved at the same speed over the surface of the cylindrical electrode.

4. Device according to one of the preceding claims **characterised in that** the cylindrical electrode has at least one, several or all of the following properties:
a width between 10 cm and 5 m, a diameter between 10 cm and 60 cm, microstructured recesses with a depth between 1 µm and 1 mm, microstructured recesses with a structure width per recess between 1 µm and 10 mm.

5. Method for the microstructured plasma treatment of a foil substrate (4), in particular of a plastic foil,
***characterised in that***
the foil substrate (4) is guided through between the surface of a rotatably mounted cylindrical electrode (1), the surface of which comprises metal, in particular chromium, or consists thereof,
and the surface of a planar high-voltage electrode (2),
the surface of the cylindrical electrode (1) having microstructured recesses (7) and the surface of the high-voltage electrode (2) having a shape complementary to the surface of the cylindrical electrode (1) and being disposed on a portion of the surface of the cylindrical electrode (1) extensively in a form fit,
a process gas being introduced between the surface of the cylindrical electrode (1) and the surface of the foil substrate (4) immediately before applying the foil substrate (4) onto the surface of the cylindrical electrode (1) and being enclosed in the microstructured recesses (7) by the foil substrate, and also a high voltage being applied between the cylindrical electrode (1) and the high-voltage electrode (2) and a cold transient plasma gas discharge being produced in the enclosed process gas (8).

6. Method according to the preceding claim, **characterised in that** a further foil, in particular a plastic foil, is guided through, advantageously rotationally, between the foil substrate and the high-voltage electrode.

7. Method according to the preceding claim, **characterised in that** the foil substrate to be treated and the further foil are guided through at the same speed between the surfaces of the cylindrical electrode and the high-voltage electrode.

8. Method according to one of the three preceding claims, **characterised in that** the cylindrical electrode has at least one, several or all of the following properties:
a width between 10 cm and 5 m, a diameter between 10 cm and 60 cm, microstructured recesses with a depth between 1 µm and 1 mm, microstructured recesses with a structure width per recess between 1 µm and 10 mm, advantageously between 20 µm and 5 mm.

9. Method according to one of the claims 5 to 8, **characterised in that** the process gas in the microstructured recesses has a pressure between 0.1 bar and 10 bar, advantageously a pressure between 0.5 bar and 1.5 bar.

10. Use of a device or of a method according to one of the preceding claims for the microstructured functionalisation of a surface, in particular for changing the wettability of the surface with water, for activation of a surface and/or for coating, in particular for metallising, a surface of a substrate to be treated.

11. Use according to the preceding claim for producing flexible strip conductors, for producing RFID switching circuits (radio frequency identification switching circuits), for producing biosensors and/or for producing smart tags (combined labels).

## Revendications

1. Dispositif permettant le traitement plasma microstructuré d'un substrat en feuille (4), en particulier une feuille en matière plastique, comportant
une électrode (1) cylindrique, montée rotative, dont la surface contient du métal, en particulier du chrome, ou est constituée de ce métal, ladite surface comportant des creux (7) microstructurés,
un dispositif de transport (3a, ..., 3d) permettant de transporter le substrat en feuille (4) à traiter, entre la surface de l'électrode (1) cylindrique et l'électrode haute tension (2), et
un dispositif permettant d'injecter le gaz de processus (8) sur la surface de l'électrode (1) cylindrique et dans l'espace intermédiaire entre l'électrode (1) cylindrique et l'électrode haute tension (2),
**caractérisé par**
une électrode haute tension (2) plane, dont la surface possède une forme complémentaire à la surface de l'électrode (1) cylindrique et peut être agencée largement par conjugaison de forme sur une partie de la surface de l'électrode (1) cylindrique.

2. Dispositif selon la revendication précédente, **caractérisé par** un dispositif permettant de transporter, en particulier en continu, une autre feuille, en particulier une feuille en matière plastique, entre la surface de la feuille à traiter ou l'électrode cylindrique et l'électrode haute tension.

3. Dispositif selon la revendication précédente, **caractérisé en ce que** le dispositif permettant de transporter le substrat en feuille à traiter et le dispositif permettant de transporter l'autre feuille sont configurés de telle sorte que le substrat en feuille à traiter et l'autre feuille peuvent être déplacés avec la même vitesse sur la surface de l'électrode cylindrique.

4. Dispositif selon l'une quelconque des revendications précédentes, **caractérisé en ce que** l'électrode cylindrique possède au moins une, plusieurs ou toutes les propriétés suivantes : une largeur entre 10 cm et 5 m, un diamètre entre 10 cm et 60 cm, des creux microstructurés d'une profondeur située entre 1 µm et 1 mm, des creux microstructurés avec une largeur de structure par creux située entre 1 µm et 10 mm.

5. Procédé permettant le traitement plasma microstructuré d'un substrat en feuille (4), en particulier une feuille en matière plastique,
**caractérisé en ce que** le substrat en feuille (4) est transporté entre la surface d'une électrode (1) cylindrique montée rotative, dont la surface contient du métal, en particulier du chrome, ou est constituée de ce métal, et la surface d'une électrode haute tension (2) plane,
la surface de l'électrode (1) cylindrique comportant des creux (7) microstructurés, et la surface de l'électrode haute tension (2) possédant une forme complémentaire à la surface de l'électrode (1) cylindrique et étant agencée principalement par conjugaison de forme sur une partie de la surface de l'électrode (1) cylindrique,
un gaz de processus (8) étant injecté entre la surface de l'électrode (1) cylindrique et la surface du substrat en feuille (4) juste avant l'application du substrat en feuille (4) sur la surface de l'électrode (1) cylindrique et étant inclus dans les creux (7) microstructurés par le substrat en feuille (4), et
une haute tension étant appliquée entre l'électrode (1) cylindrique et l'électrode haute tension (2) et une décharge de gaz plasma transitoire froide étant générée dans le gaz de processus (8) inclus.

6. Procédé selon la revendication précédente, **caractérisé en ce qu'**une autre feuille, en particulier une feuille en matière plastique, est transportée, de manière avantageuse en continu, entre le substrat en feuille et l'électrode haute tension.

7. Procédé selon la revendication précédente, **caractérisé en ce que** le substrat en feuille à traiter et l'autre feuille sont transportés avec la même vitesse entre les surfaces de l'électrode cylindrique et de l'électrode haute tension.

8. Procédé selon l'une quelconque des trois revendications précédentes, **caractérisé en ce que** l'électrode cylindrique possède au moins une, plusieurs ou toutes les propriétés suivantes : une largeur située entre 10 cm et 5 m, un diamètre situé entre 10 cm et 60 cm, des creux microstructurés avec une profondeur située entre 1 µm et 1 mm, des creux microstructurés avec une largeur de structure par creux située entre 1 µm et 10 mm, de manière avantageuse entre 20 µm et 5 mm.

9. Procédé selon l'une quelconque des revendications 5 à 8, **caractérisé en ce que** le gaz de processus présente dans les creux microstructurés une pression située entre 0,1 bar et 10 bars, de manière avantageuse une pression située entre 0,5 bar et 1,5 bar.

10. Utilisation d'un dispositif ou d'un procédé selon l'une quelconque des revendications précédentes, pour la fonctionnalisation microstructurée d'une surface, en particulier pour la modification de la mouillabilité de la surface avec de l'eau, pour l'activation d'une surface et/ou pour le revêtement, en particulier la métallisation, d'une surface d'un substrat à traiter.

11. Utilisation selon la revendication précédente pour la réalisation de pistes conductives flexibles, pour la réalisation de circuits RFID (circuits de radio-identification), pour la réalisation de biocapteurs et/ou pour la réalisation de SmartTags (étiquettes combinées).
